# EUROPÄISCHE PATENTSCHRIFT

(11) **EP 1 776 250 B1**
(45) Veröffentlichungstag und Bekanntmachung des Hinweises auf die Patenterteilung: **29.04.2009**
(21) Anmeldenummer: 05777635.3
(22) Anmeldetag: 10.08.2005
(51) Int. Cl.: B60J 7/14, B60J 7/20

(54) **HARDTOP-VERDECK FÜR EIN CABRIOLET-FAHRZEUG**
HARDTOP FOR A CABRIOLET VEHICLE
TOIT AMOVIBLE POUR VEHICULE CABRIOLET

(30) Priorität: 12.08.2004 DE 102004039134
(43) Veröffentlichungstag der Anmeldung: 25.04.2007
(73) Patentinhaber: Daimler AG, 70327 Stuttgart (DE)
(72) Erfinder: KOCH, Michael, 71063 Sindelfingen (DE)
(74) Vertreter: JENSEN & SON
(86) Internationale Anmeldenummer: PCT/EP2005/008675
(87) Internationale Veröffentlichungsnummer: WO 2006/018203

(56) Entgegenhaltungen:
- WO-A-02/062605
- DE-A1- 4 316 485
- DE-A1- 10 213 548
- DE-A1- 10 216 417
- DE-C1- 19 706 444
- DE-C1- 19 960 010

## Beschreibung

Die Erfindung betrifft ein Hardtop-Verdeck für ein Cabriolet-Fahrzeug mit wenigstens zwei zwischen einer geschlossenen Stellung und einer abgelegten Stellung verstellbaren Dachteilen nach der im Oberbegriff von Anspruch 1 näher definierten Art. Des weiteren betrifft die Erfindung ein Cabriolet-Fahrzeug, mit dem erfindungsgemäßen Hardtop-Verdeck.

Aus der DE 199 60 010 C2 ist ein gattungsgemäßes Hardtop-Verdeck sowie ein entsprechendes Cabriolet-Fahrzeug bekannt. Dieses kann aus seiner im Kofferraum des Cabriolet-Fahrzeugs abgelegten Stellung in eine sogenannte Beladestellung gebracht werden, wodurch es möglich ist, den Kofferraum bequem zu beladen und anschließend die Dachteile wieder in ihre abgelegte Stellung zu bringen.

Nachteilig bei dieser bekannten Lösung ist jedoch, dass für das Einnehmen der Beladestellung aufgrund der erforderlichen Umlenkung eine zusätzliche Betätigungs- bzw. Antriebseinrichtung, in diesem Fall ein zusätzlicher Hydraulikzylinder, erforderlich ist, der nicht nur zusätzliche Herstellungs- und Montagekosten verursacht, sondern als zusätzliches Bauteil auch ein erhöhtes Ausfallrisiko darstellt.

Es ist daher Aufgabe der vorliegenden Erfindung, ein Hardtop-Verdeck für ein Cabriolet-Fahrzeug zu schaffen, bei welchem mit einem möglichst geringen Aufwand, insbesondere mit lediglich einer Antriebseinrichtung, eine Beladestellung für die Dachteile eingenommen werden kann.

Erfindungsgemäß wird diese Aufgabe durch die in Anspruch 1 genannten Merkmale gelöst.

Durch die erfindungsgemäße Ausführung der Antriebseinrichtung derart, dass diese ein translatorisches und ein rotatorisches Antriebselement aufweist, ist eine konstruktiv sehr einfache Kopplung des Antriebs der Dachteile über das Verdeckgestänge und der Bewegung des Zwischenlagers gegenüber dem Hauptlager möglich. Der gelenkig an dem translatorischen Antriebselement angebrachte Steuerhebel ist auf diese Weise in der Lage, bei Beaufschlagung des translatorischen Antriebselements die Dachteile in die Beladestellung zu bringen. Dadurch ist zum Antrieb des erfindungsgemäßen Hardtop-Verdecks vorteilhafterweise lediglich eine Antriebseinrichtung, bestehend aus dem translatorischen und dem rotatorischen Antriebselement, erforderlich.

Weitere Vorteile der erfindungsgemäßen Lösung sind der Entfall von bei Konstruktionen gemäß dem Stand der Technik zusätzlich erforderlichen Umlenk- und Steuerhebel sowie eine konstruktive Vereinfachung des Zwischenlagers. Des weiteren kann die Antriebseinrichtung für das erfindungsgemäße Hardtop-Verdeck sehr kompakt ausgeführt werden, wodurch sich eine im Automobilbau stets vorteilhafte Einsparung von Bauraum ergibt. Durch den Entfall der zweiten Antriebseinrichtung kann des weiteren auf bislang erforderliche Endschalter verzichtet werden, was den Steuerungsaufwand beim Bewegen des erfindungsgemäßen Hardtop-Verdecks verringert und die Zuverlässigkeit desselben erhöht.

Eine besonders einfache Ausführungsform der Antriebseinrichtung ergibt sich, wenn in einer vorteilhaften Ausgestaltung der Erfindung das translatorische Antriebselement und das rotatorische Antriebselement ineinander greifende Verzahnungen aufweisen.

Ein Cabriolet-Fahrzeug mit einem erfindungsgemäßen Hardtop-Verdeck ist in Anspruch 10 angegeben.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Dabei zeigen:
- Fig. 1: das erfindungsgemäße Hardtop-Verdeck in seiner ge- schlossenen Stellung;
- Fig. 2: das Hardtop-Verdeck aus Fig. 1 in einer Zwischenstel- lung;
- Fig. 3: das Hardtop-Verdeck aus Fig. 1 in seiner abgelegten Stellung;
- Fig. 4: das Hardtop-Verdeck aus Fig. 1 in seiner Beladestel- lung;
- Fig. 5: eine vergrößerte Darstellung der Lagereinrichtung des erfindungsgemäßen Hardtop-Verdecks in der Stellung gemäß Fig. 1;
- Fig. 6: die Lagereinrichtung aus Fig. 5 in der Stellung des Hardtop-Verdecks gemäß Fig. 3; und
- Fig. 7: die Lagereinrichtung aus Fig. 5 in der Stellung des Hardtop-Verdecks gemäß Fig. 4.

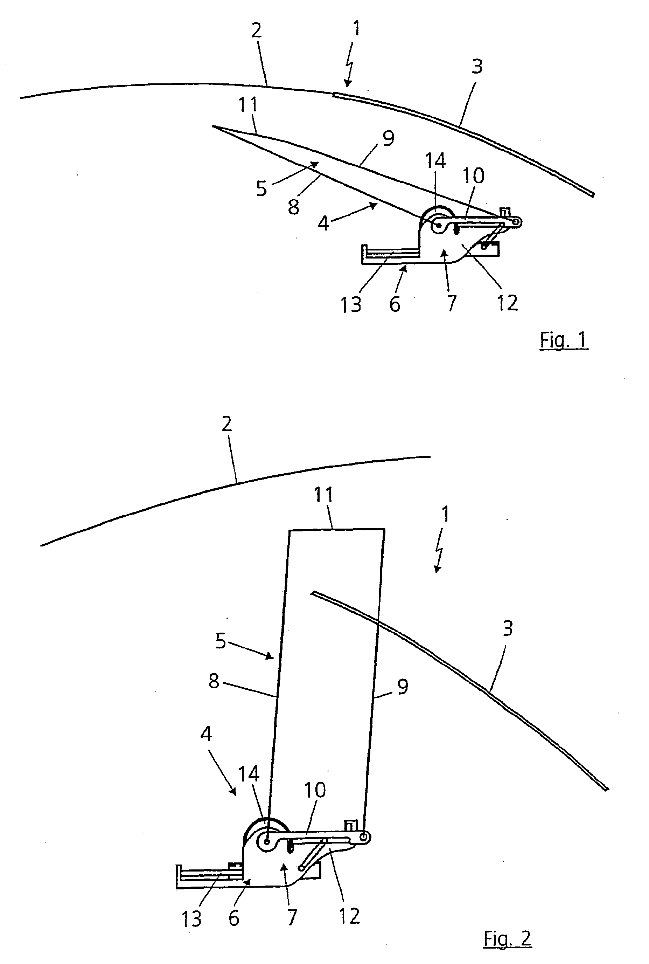

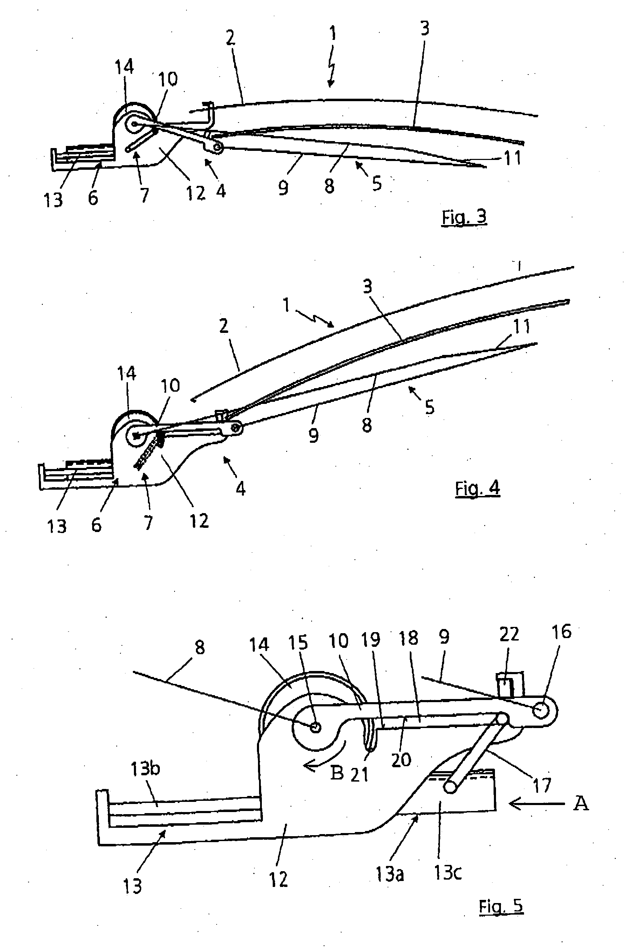

Fig. 1 zeigt ein Hardtop-Verdeck 1 für ein in seiner Gesamtheit nicht dargestelltes Cabriolet-Fahrzeug. Das Hardtop-Verdeck 1 weist zwei Dachteile auf, nämlich ein vorderes Dachteil 2 und ein hinteres Dachteil 3. Bei der Darstellung gemäß Fig. 1 befinden sich die beiden Dachteile 2 und 3 in ihrer geschlossenen Stellung, in der sie ein Dach für das Cabriolet-Fahrzeug bilden. Wie nachfolgend beschrieben und beispielsweise aus der DE 199 60 010 C2 bekannt, kann das Hardtop-Verdeck 1 mittels einer entsprechenden Ablegebewegung in eine abgelegte Stellung gebracht werden, in der es sich in einem nicht dargestellten Kofferraum des Cabriolet-Fahrzeugs befindet. Diese abgelegte Stellung des Hardtop-Verdecks 1 ist in Fig. 3 dargestellt. Dagegen zeigt Fig. 2 eine Zwischenstellung und Fig. 4 eine sogenannte Beladestellung, bei welcher das Hardtop-Verdeck 1 gegenüber der abgelegten Stellung angehoben ist, um einen besseren Zugang zu dem Kofferraum des Cabriolet-Fahrzeugs zu ermöglichen. Möchte also ein Fahrer oder Insasse des mit dem Hardtop-Verdeck 1 ausgestatteten Cabriolet-Fahrzeugs den Kofferraum beladen, so kann er, wie nachfolgend detailliert beschrieben, das Hardtop-Verdeck 1 aus seiner abgelegten Stellung in die Beladestellung bringen, den Kofferraum mit beliebigen Gegenständen beladen und anschließend das Hardtop-Verdeck 1 wieder von der Beladestellung in die abgelegte Stellung zurückführen.

Zur Bewegung des Hardtop-Verdecks 1 zwischen den in den Figuren 1 bis 4 dargestellten Stellungen dient eine Verdeckkinematik 4, die ein Verdeckgestänge 5, eine Antriebseinrichtung 6 und eine Lagereinrichtung 7 aufweist. In an sich bekannter Weise ist das Verdeckgestänge 5 als Viergelenk ausgebildet, welches aus einem Hauptlenker 8, einem C-Säulen-Lenker 9, einem Zwischenlager 10 und einem den Hauptlenker 8 mit dem C-Säulen-Lenker 9 verbindenden, oberen Verbindungslenker 11 besteht. Der Hauptlenker 8 und der C-Säulen-Lenker 9 sind mit dem Zwischenlager 10 gelenkig verbunden. In ebenfalls an sich bekannter, in den Figuren 1 bis 4 jedoch nicht erkennbarer Weise ist das vordere Dachteil 2 an dem oberen Verbindungslenker 11 und das hintere Dachteil 3 an dem C-Säulen-Lenker 9 angebracht. Die Lagereinrichtung 7 weist neben dem einen Teil des Viergelenks bildenden Zwischenlager 10 ein Hauptlager 12 auf, welches an einer nicht dargestellten Karosserie des Cabriolet-Fahrzeugs angebracht ist. Die Antriebseinrichtung 6 weist ein translatorisches Antriebselement 13 und ein rotatorisches Antriebselement 14 auf, welche miteinander in Eingriff stehen. Um einen sicheren Betrieb des Hardtop-Verdecks 1 zu gewährleisten und für eine gleichmäßige Kräfteverteilung über dasselbe zu sorgen, sind in an sich bekannter, aus Gründen der Übersichtlichkeit jedoch nicht dargestellter Weise jeweils zwei auf beiden Seiten des Hardtop-Verdecks 1 angeordnete Verdeckgestänge 5, Antriebseinrichtungen 6 und Lagereinrichtungen 7 vorgesehen.

Unter Bezugnahme auf die Figuren 5, 6 und 7 werden nachfolgend die Antriebseinrichtung 6 und die Lagereinrichtung 7 des Hardtop-Verdecks 1 detaillierter beschrieben.

Das translatorische Antriebselement 13 der Antriebseinrichtung 6 weist eine hydraulische Zylinder-Kolben-Einheit 13a auf, deren Kolbenstange 13b an dem Hauptlager 12 angebracht ist und dessen Gehäuse durch eine Zahnstange 13c gebildet ist. Durch die Ausführung des Gehäuses der Kolbenstange 13b als Zahnstange 13c kann Bauraum eingespart werden. Die Zahnstange 13c weist eine Verzahnung auf, die in eine Verzahnung des als Zahnrad ausgebildeten rotatorischen Antriebselements 14 eingreift und somit für den Antrieb des rotatorischen Antriebselements 14 durch das translatorische Antriebselement 13 sorgt. Aus Bauraumgründen kann es sich bei dem rotatorischen Antriebselements 14 auch lediglich um ein Zahnradsegment handeln.

Aus Fig. 5 geht des weiteren hervor, dass der Hauptlenker 8 mit dem rotatorischen Antriebselement 14 und dem Zwischenlager 10 verbunden ist und mit dem Zwischenlager 10 um einen gemeinsamen Drehpunkt 15, nämlich der Achse des rotatorischen Antriebselements 14, an dem der Hauptlenker 8 angebracht ist, drehbar gelagert ist. Der C-Säulen-Lenker 9 ist an einem weiteren Drehpunkt 16 mit dem Zwischenlager 10 verbunden. An dem translatorischen Antriebselement 13 ist ein Steuerhebel 17 gelenkig angebracht, der in einer zwischen dem Hauptlager 12 und dem Zwischenlager 10 gebildeten Führungsbahn 18 zwangsgeführt ist. Die Führungsbahn 18 für den Steuerhebel 17 ist durch eine obere Außenkante 19 des Hauptlagers 12 und eine der Außenkante 19 des Hauptlagers 12 zugewandte, untere Außenkante 20 des Zwischenlagers 10 gebildet und im wesentlichen gerade ausgeführt.

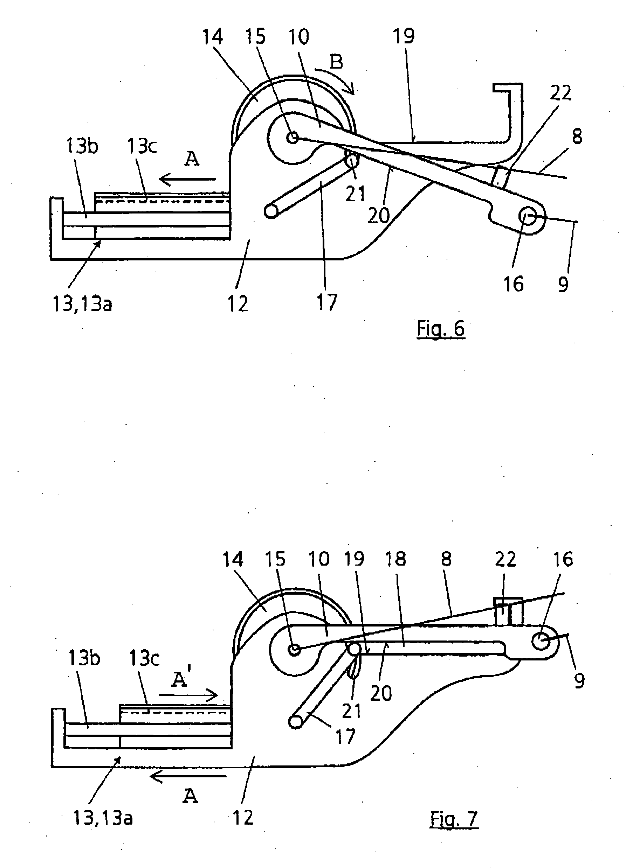

Wie aus einem Vergleich von Fig. 5 mit Fig. 6 deutlich wird, bewegt sich bei Beaufschlagung des translatorischen Antriebselements 13 in Richtung des Pfeils "A" die Zahnstange 13c in eben dieser Richtung. Durch die Bewegung der Zahnstange 13c in Richtung des Pfeils "A" wird das Zahnrad gemäß dem Pfeil "B" rotiert, was zur Rotation des Verdeckgestänges 5 und somit der beiden Dachteile 2 und 3 in Richtung der abgelegten Stellung führt. Des weiteren führt die Bewegung des translatorischen Antriebselements 13 auch zu einer Bewegung des an der Zahnstange 13c angebrachten Steuerhebels 17 in Richtung des Pfeils "A" und somit entlang der Führungsbahn 18. Um die Dachteile 2 und 3 in die abgelegte Stellung zu bringen, weist die Führungsbahn 18 an ihrem dem Drehpunkt 15 zugewandten Ende eine Aussparung 21 auf, in welche der Steuerhebel 17 durch die Zahnstange 13c bewegt wird. Dadurch kann das Zwischenlager 10 sich gegenüber dem Hauptlager 12 um den Drehpunkt 15 verdrehen, so dass auch der Hauptlenker 8 und somit die beiden Dachteile 2 und 3 gemäß dem Pfeil "B" weiterbewegt werden. Solange sich der Steuerhebel 17 in dem geraden Abschnitt der Führungsbahn 18 bewegt, ist ein Absenken des Zwischenlagers 10 nicht möglich, da der Steuerhebel 17 das Zwischenlager 10 gegenüber dem Hauptlager 12 abstützt. Dieses Absenken geschieht erst, wenn der Steuerhebel 17 bei der Bewegung des translatorischen Antriebselements 13 in Richtung des Pfeils "A" die Aussparung 21 erreicht. Insgesamt ergibt sich hierdurch eine kontinuierliche Bewegung des Hardtop-Verdecks 1 von der geschlossenen Stellung in die abgelegte Stellung.

Um von der abgelegten Stellung gemäß Fig. 6 in die in Fig. 7 dargestellte Beladestellung zu gelangen, wird das translatorische Antriebselement 13 durch entsprechende Beaufschlagung der hydraulischen Zylinder-Kolben-Einheit 13a entgegen der Pfeilrichtung "A" und somit in Richtung des in Pfeils "A'" bewegt, wodurch sich der Steuerhebel 17 in der Aussparung 21 nach oben bewegt und das Zwischenlager 10 mit dem Hauptlenker 8 und den beiden Dachteilen 2 und 3 nach oben bewegt. Um diese Bewegung des Zwischenlagers 10 zu begrenzen, ist an demselben ein Anschlag 22 angebracht, der in der oberen Stellung des Zwischenlagers 10 an einem starren Teil des Hauptlagers 12 anliegt. Selbstverständlich könnte der Anschlag 22 zur Begrenzung der Bewegung des Zwischenlagers 10 auch an dem Hauptlager 12 angebracht sein.

Von der Beladestellung kann das Hardtop-Verdeck 1 durch eine Bewegung des translatorischen Antriebselements 13 in Richtung des Pfeils "A" wieder in die abgelegte Stellung gebracht werden. Sämtliche Bewegungen des Hardtop-Verdecks 1 können durch eine nicht dargestellte Steuerungseinrichtung gesteuert werden.

## Patentansprüche

1. Hardtop-Verdeck (1) für ein Cabriolet-Fahrzeug mit wenigstens zwei zwischen einer geschlossenen Stellung und einer abgelegten Stellung verstellbaren Dachteilen (2, 3), wobei die Dachteile in der abgelegten Stellung in einem Kofferraum des Cabriolet-Fahrzeugs abgelegt und in eine gegenüber der abgelegten Stellung angehobene Beladestellung bringbar sind, und mit einer Verdeckkinematik, welche wenigstens ein Verdeckgestänge, wenigstens eine Antriebseinrichtung (6) und wenigstens eine Lagereinrichtung (7) aufweist, wobei die Dachteile (2, 3) über wenigstens einen Lenker (8) des Verdeckgestänges an der Lagereinrichtung (7) angelenkt und mittels der Antriebseinrichtung (6) verstellbar sind, und wobei die Lagereinrichtung ein Hauptlager (12) und ein gegenüber dem Hauptlager bewegliches Zwischenlager (10) aufweist,
**dadurch gekennzeichnet,**
**dass** die Antriebseinrichtung (6) ein translatorisches Antriebselement (13) und ein rotatorisches Antriebselement (14) aufweist, welche miteinander in Eingriff stehen, wobei der Lenker (8) des Verdeckgestänges (5) mit dem rotatorischen Antriebselement (14) verbunden und mit dem Zwischenlager (10) um einen gemeinsamen Drehpunkt (15) drehbar gelagert ist, und wobei an dem translatorischen Antriebselement (13) ein Steuerhebel (17) gelenkig angebracht ist, der zwischen dem Hauptlager (12) und dem Zwischenlager (10) in einer Führungsbahn (18) derart geführt ist, dass er bei Beaufschlagung des translatorischen Antriebselements (13) die Dachteile (2,3) in die Beladestellung bringt.

2. Hardtop-Verdeck nach Anspruch 1,
**dadurch gekennzeichnet,**
**dass** die Führungsbahn (18) zwischen dem Hauptlager (12) und dem Zwischenlager (10) durch zwei einander zugewandte Außenkanten (19,20) des Hauptlagers (12) und des Zwischenlagers (10) gebildet ist.

3. Hardtop-Verdeck nach Anspruch 1 oder 2,
**dadurch gekennzeichnet,**
**dass** die Führungsbahn (18) im wesentlichen gerade ausgeführt ist und an einem Ende eine Aussparung (21) aufweist, welche ein Absenken des Zwischenlagers (10) ermöglicht, um die Dachteile (2,3) in die abgelegte Stellung zu bringen.

4. Hardtop-Verdeck nach Anspruch 1, 2 oder 3,
**dadurch gekennzeichnet,**
**dass** das translatorische Antriebselement (13) und das rotatorische Antriebselement (14) ineinander greifende Verzahnungen aufweisen.

5. Hardtop-Verdeck nach einem der Ansprüche 1 bis 4,
**dadurch gekennzeichnet,**
**dass** ein Anschlag (22) zur Begrenzung der Bewegung des Zwischenlagers (10) gegenüber dem Hauptlager (12) vorgesehen ist.

6. Hardtop-Verdeck nach einem der Ansprüche 1 bis 5,
**dadurch gekennzeichnet,**
**dass** das Verdeckgestänge (5) als Viergelenk ausgebildet ist, welches aus dem mit dem rotatorischen Antriebselement (14) verbundenen Lenker (8), einem C-Säulen-Lenker (9), dem Zwischenlager (10) und einem oberen Verbindungslenker (11) besteht.

7. Hardtop-Verdeck nach einem der Ansprüche 1 bis 6,
**dadurch gekennzeichnet,**
**dass** jeweils zwei auf beiden Seiten des Hardtop-Verdecks (1) angeordnete Verdeckgestänge (5), Antriebseinrichtungen (6) und Lagereinrichtungen (7) vorgesehen sind.

8. Hardtop-Verdeck nach einem der Ansprüche 1 bis 7,
**dadurch gekennzeichnet,**
**dass** das translatorische Antriebselement (13) eine hydraulischen Zylinder-Kolben-Einheit (13a) aufweist.

9. Hardtop-Verdeck nach Anspruch 8,
**dadurch gekennzeichnet,**
**dass** das eine Kolbenstange (13b) der hydraulischen Zylinder-Kolben-Einheit (13a) an dem Hauptlager (12) angebracht ist.

10. Cabriolet-Fahrzeug mit einem Hardtop-Verdeck nach einem der Ansprüche 1 bis 9.

## Claims

1. Hardtop hood (1) for a cabriolet vehicle with at least two roof portions (2, 3) that can be adjusted between a closed position and a stowed-away position, such that the roof portions in the stowed position are stowed in a trunk space of the cabriolet vehicle and can be brought to a loading position raised in relation to the stowed position, and with a hood kinematic system comprising at least one hood linkage, at least one drive mechanism (6) and at least one bearing device (7), such that the roof portions (2, 3) are articulated to the bearing device (7) by at least one guide-rod (8) of the hood linkage and can be moved by means of the drive mechanism (6), and such that the bearing device comprises a main bearing (12) and an intermediate bearing (10) that can move relative to the main bearing,
**characterised in that**
the drive mechanism (6) comprises a translational drive element (13) and a rotary drive element (14) which are engaged with one another, such that the guide rod (8) of the hood linkage (5) is connected to the rotary drive element (14) and is mounted to rotate with the intermediate bearing (10) about a common rotation point (15), and such that a control lever (17) is articulated on the translational drive element (13), which is guided in a guide track (18) between the main bearing (12) and the intermediate bearing (10) in such manner that when the translational drive element (13) is acted upon, it brings the roof portions (2, 3) to their loading position.

2. Hardtop hood according to Claim 1,
**characterised in that**
the guide track (18) between the main bearing (12) and the intermediate bearing (10) is formed by two outer edges (19, 20) of the main bearing (12) and the intermediate bearing (10) that face toward one another.

3. Hardtop hood according to Claims 1 or 2,
**characterised in that**
the guide track (18) is essentially straight and has at one end a cutout (21) which allows the intermediate bearing (10) to drop down in order to bring the roof portions (2, 3) to the stowed position.

4. Hardtop hood according to Claims 1, 2 or 3,
**characterised in that**
the translational drive element (13) and the rotary drive element (14) comprise teeth which engage with one another.

5. Hardtop hood according to any of Claims 1 to 4,
**characterised in that**
an abutment stop (22) is provided to limit the movement of the intermediate bearing (10) relative to the main bearing (12).

6. Hardtop hood according to any of Claims 1 to 5,
**characterised in that**
the hood linkage (5) has four components, consisting of the guide-rod (8) connected to the rotary drive element (14), a C-column rod (9) the intermediate bearing (10) and an upper connecting rod (11).

7. Hardtop hood according to any of Claims 1 to 6,
**characterised in that**
two hood linkages (5) drive mechanisms (6) and bearing devices (7) are provided, respectively on either side of the hardtop hood.

8. Hardtop hood according to any of Claims 1 to 7,
**characterised in that**
the translational drive element (13) comprises a hydraulic cylinder-piston unit (13a).

9. Hardtop hood according to Claim 8,
**characterised in that**
a piston rod (13b) of the hydraulic cylinder-piston unit (13a) is attached to the main bearing.

10. Cabriolet vehicle with a hardtop hood according to any of Claims 1 to 9.

## Revendications

1. Toit amovible (1) pour véhicule cabriolet avec au moins deux parties (2, 3) de toit pouvant être déplacées entre une position déployée et une position rabattue, les partie de toit dans la position rabattue étant rangées dans un coffre de véhicule cabriolet et peuvent être amenées dans une position de chargement relevée par rapport à la position rabattue, et avec une cinématique de capote, laquelle présente au moins une tringlerie de capote, au moins un dispositif d'entraînement (6) et au moins un dispositif de support (7), les parties du toit (2, 3) sont reliées de façon articulée au dispositif de support (7) au moins par une bielle (8) de la tringlerie de capote et peuvent être déplacées au moyen du dispositif (6) d'entraînement, et le dispositif de support présentant un palier principal (12) et un palier intermédiaire (10) mobile par rapport au palier principal, **caractérisé en ce que**
le dispositif d'entraînement (6) présente un élément d'entraînement (13) à translation et un élément d'entraînement (14) à rotation, qui sont en prise l'un avec l'autre, la bielle (8) de la tringlerie de capote (5) étant reliée à l'élément d'entraînement (14) de rotation et est montée de façon à pouvoir pivoter avec le palier (10) intermédiaire autour d'un pivot commun (15), et un levier de commande (17) étant disposé de façon articulée sur l'élément d'entraînement (13) à translation, lequel est guidé entre le palier principal (12) et le palier intermédiaire (10) dans une glissière de guidage (18), de façon à amener les parties de toit (2, 3) dans la position de chargement lorsque l'élément d'entraînement (13) à translation est sollicité.

2. Toit amovible selon la revendication 1, **caractérisé en ce que** la glissière de guidage (18) entre le palier principal (12) et le palier intermédiaire (10) est formée par deux bords extérieurs (19, 20) orientés l'un vers l'autre du palier principal (12) et du palier intermédiaire (10).

3. Toit amovible selon la revendication 1 ou 2**, caractérisé en ce que** la glissière de guidage (18) est essentiellement droite et présente à une extrémité une rainure (21), laquelle permet un abaissement du palier intermédiaire (10) pour amener les parties du toit (2, 3) dans la position rabattue.

4. Toit amovible selon la revendication 1, 2 ou 3, **caractérisé en ce que** l'élément d'entraînement (13) à translation et l'élément d'entraînement (14) à rotation présentent des engrènements s'engrenant les uns dans les autres.

5. Toit amovible selon l'une quelconque des revendications 1 à 4, **caractérisé en ce que** une butée (22) est prévue pour limiter le mouvement du palier intermédiaire (10) par rapport au palier principal (12).

6. Toit amovible selon l'une quelconque des revendications 1 à 5, **caractérisé en ce que** la tringlerie (5) de capote est conçue comme un système à quatre joints articulés, qui est composé de la bielle (8) reliée à l'élément d'entraînement (14) à rotation, une bielle (9) à colonne en C, le palier intermédiaire (10) et une bielle de liaison supérieure (11).

7. Toit amovible selon l'une quelconque des revendications 1 à 6, **caractérisé en ce qu'**il est prévu respectivement deux tringleries (5) de capote, dispositifs d'entraînement (6) et dispositifs de support (7) disposés sur chacun des côtés du toit amovible.

8. Toit amovible selon l'une quelconque des revendications 1 à 7, **caractérisé en ce que** l'élément d'entraînement (13) à translation présente une unité piston - cylindre hydraulique (13a).

9. Toit amovible selon la revendication 8, **caractérisé en ce que** la tige de piston (13b) de l'unité piston - cylindre hydraulique (13a) est disposée sur le palier principal (12).

10. Véhicule cabriolet avec un toit amovible selon l'une quelconque des revendications 1 à 9.
